# EUROPÄISCHE PATENTSCHRIFT

(11) **EP 1 116 569 B1**
(45) Veröffentlichungstag und Bekanntmachung des Hinweises auf die Patenterteilung: **16.11.2005**
(21) Anmeldenummer: 00126762.4
(22) Anmeldetag: 06.12.2000
(51) Int. Cl.: B29C 47/20, B29C 47/26

(54) **Extruderdüsenkopf**
Extruder die
Tête d'extrusion

(30) Priorität: 14.01.2000 DE 10001363
(43) Veröffentlichungstag der Anmeldung: 18.07.2001
(73) Patentinhaber: Windmöller & Hölscher, D-49525 Lengerich (DE)
(72) Erfinder: Meyer, Ulrich, 49479 Ibbenbüren (DE)

(56) Entgegenhaltungen:
- DE-A- 2 250 151
- DE-U- 8 435 854
- US-A- 3 966 377
- US-A- 4 019 843
- US-A- 4 298 325

## Beschreibung

Die Erfindung betrifft einen Extruderdüsenkopf, vorzugsweise Folienblaskopf, bestehend aus einem inneren zylindrischen Dorn und einem diesen konzentrisch einfassenden Mantel zwischen denen ein ringförmiger Kanal gebildet ist, der in einen Düsenspalt mündet, und aus mindestens einer in den dem Düsenspalt gegenüberliegenden Bereich in den ringförmigen Kanal mündenden, eine Schmelze zuführenden Leitung.

Folienblasköpfe dieser Art sind beispielsweise aus der US 4 298 325 und aus der US 4 019 843 bekannt. Weitere Folienblasköpfe, die eine Erweiterung der vorgenannten Folienblasköpfe für mehrschichtige Folien darstellen, sind aus der DE 84 35 854 U1, der US 3 966 377 und der DE 2 250 151 bekannt. Dabei handelt es sich um Extruderdüsenköpfe, bestehend aus einem den Boden bildenden Düsenkörper, der in Verbindung mit einem inneren rotationssymmetrischen Kern steht und aus mindestens zwei den Kern einfassenden Ringen, deren Stirnflächen dichtend an komplementären Ringflächen des Boden anliegen und midesem verbunden sind, wobei der Kern mit dem diesen einfassenden Ring und die einander einfassenden Ringe ringförmige Kanäle begrenzen, die in einen gemeinsamen Düsenspalt münden.

Üblicherweise sind in den Dorn oder in die eingefassten Ringe eine oder mehrere wendelförmige Nuten eingearbeitet, deren Tiefe von dem oder den Zuführungskanälen ausgehend in Richtung zu dem Düsenspalt abnimmt, so dass die Kunststoffschmelze zunehmend über die die Kanäle begrenzenden Stege hinweg tritt und eine gleichmäßige Strömung in axialer Richtung annimmt.

Ein besonderes Problem bekannter Extruderdüsenköpfe besteht darin, dass der Dorn oder die eingefassten Ringe jenseits der Anfänge der ringförmigen Kanäle dichtend in eine zylindrische Bohrung des Mantels oder des jeweils den inneren Ring einfassenden folgenden Ring eingepasst wird. Wird jedoch durch die diese Kanäle durchströmende Kunststoffschmelze erwärmt, dehnt sich der einfassende Ring oder der Mantel aufgrund des größeren Durchmessers stärker aus als der zentrale Dorn oder der eingefasste Ring, so dass zwischen beiden ein Spalt bildet, in den die unter Druck eingespeiste Kunststoffschmelze eindringt. Da sich die Schmelze im Bereich dieses Spalts aufstauen und aufgrund ihrer langen Verweilzeit in dem heißen Düsenkopf sich zersetzen und verspröden kann, können Teilchen der abgelagerten und verkrusteten Schmelze mitgerissen werden, die sich in dem extrudierten Folienschlauch bzw. der aufgeblasenen Schlauchblase als Störungsstellen bemerkbar machen.

Aufgabe der Erfindung ist es daher, einen Extruderdüsenkopf der eingangs angegebenen Art zu schaffen, bei dem kein Spalt zwischen dem zentralen Dorn und dem diesen einfassenden Mantel vorhanden ist, in dem sich Kunststoffschmelze stauen und ablagern kann.

Erfindungsgemäß wird diese Aufgabe durch verschiedene Ausführungsformen eines Extruderdüsenköpfes nach den Ansprüchen 1, 6 und 11 gelöst.

Nach einer bevorzugten Ausführungsform ist vorgesehen, daß der flanschförmige Fuß angrenzend an den Dorn mit einer oder mehreren spiraligen Nuten versehen ist, die über den Übergangsbereich in die Umfangsfläche des Dorns wendelförmig einlaufen und deren Tiefen zum Düsenspalt hin abnehmen und die im Fuß ihren Anfang haben und in deren Anfangsbereich die Schmelze zuführenden Bohrungen münden. Bei dieser Ausführungsform sind die Ränder des bzw. der in dem flanschförmigen Fuß eingearbeiteten Nuten durch die diese abdeckende Stirnfläche des Mantels gegenüber der Ringfläche des Fußes abgedichtet.

Nach einer weiteren bevorzugten Ausführungsform ist der Randbereich der Stirnfläche des Dorns mit einer oder mehreren spiralig verlaufenden Nuten versehen, die über den Übergangsbereich wendelförmig in die Umfangsflächen des Dorns einlaufen und ihren Anfang in dem Randbereich der Stirnfläche haben und deren Tiefen zum Düsenspalt hin abnehmen, und daß in den Anfangsbereichen der Nuten die die Schmelze zuführenden Bohrungen münden.

Nach einer weiteren bevorzugten Ausführungsform ist vorgesehen, daß die Randbereiche der Stirnflächen des Kerns und der Ringe jeweils mit einer oder mehreren spiralig verlaufenden Nuten versehen sind, die über die Übergangsbereiche spiralig oder wendelförmig in die Umfangsbereiche des Dorns bzw. der Ringe einlaufen und ihren Anfang in den Randbereichen haben und deren Tiefen zum Düsenspalt hin abnehmen, wobei in den Anfangsbereichen der Nuten die die Schmelze zuführenden Bohrungen münden.

Zweckmäßigerweise sind die Übergangsbereiche abgerundet, so daß die Schmelze mit laminarer Strömung über diese hinwegtreten kann.

Zweckmäßigerweise sind die Stirnflächen mit den Boden- bzw. Ringflächen durch Dehnschrauben verspannt.

Die dichtend aufeinanderliegenden Stirnflächen sind komplementär zueinander und vorzugsweise eben ausgebildet.

Bestehen die Extruderdüsenköpfe aus Folienblasköpfen, sind zusätzlich nicht dargestellte den Folienblaskopf durchsetzende Bohrungen vorgesehen, durch die Blasluft zum Aufblasen des extrudierten Folienschlauches zu einer Schlauchblase und zum Kühlen zugeführt und auch wieder abgeführt werden kann.

Ausführungsbeispiele der Erfindung werden nachstehend anhand der Zeichnung näher erläutert. In dieser zeigt
- Fig. 1: eine schematische perspektivische Darstellung eines Extruderdüsenkopfs dessen mit einem flanschförmigen Fuß versehener Dorn von einem zylinderringförmigen Mantel eingefaßt ist, der geschnitten ist,
- Fig. 2: einen Schnitt durch den Extruderdüsenkopf nach Fig. 1,
- Fig. 3: eine perspektivische Darstellung eines Extruderdüsenkopfs, bei dem der zylindrische Dorn in einen mit einer Sacklochbohrung versehenen Düsenkörper, der geschnitten dargestellt ist, eingesetzt ist,
- Fig. 4: eine Unteransicht des Dorns nach Fig. 3,

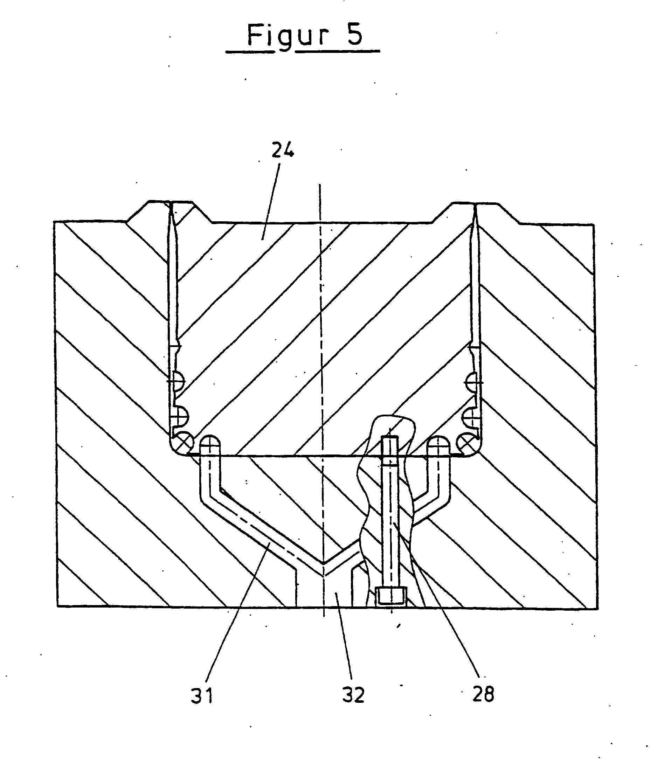

- Fig. 5: einen Schnitt durch den Extruderdüsenkopf nach Fig. 3 und
- Fig. 6: einen Schnitt durch einen Extruderdüsenkopf zur Koextrusion dreier Kunststoffschmelzen.

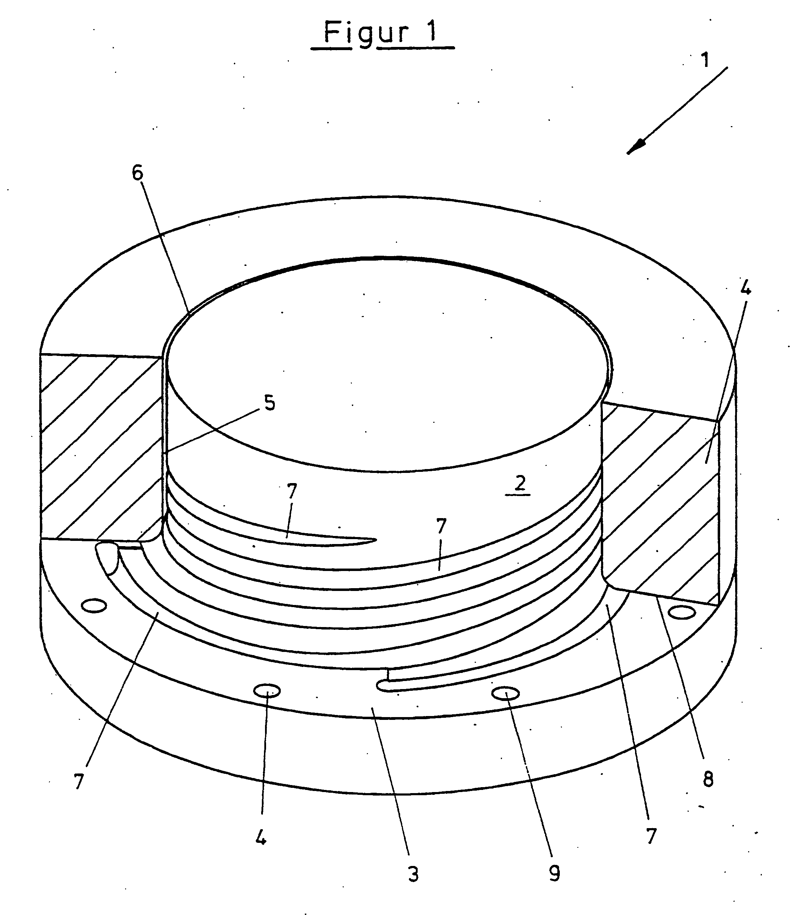

Der aus Fig. 1 ersichtliche Extruderdüsenkopf 1 besteht aus einem zentralen zylindrischen Dorn 2, der einstückig mit einem flanschförmigen Fuß 3 verbunden ist. Der Dorn 2 ist von einem einen Mantel bildenden zylindrischen Ring 4 eingefaßt, zwischen dessen Innenwandung und dem Dorn 2 ein ringförmiger Kanal 5 gebildet ist, der in den Düsenspalt 6 mündet. Ausgehend von dem inneren Randbereich des flanschförmigen Fußes 3 sind in diesen mehrgängig spiralige Nuten 7 eingearbeitet, die sich über den Übergangsbereich von dem flanschförmigen Fuß 3 zu dem zylindrischen Dorn 2 erstrecken und auf diesem mehrgängig wendelförmig weiterlaufen. Die Nuten 7 nehmen in Richtung auf den Düsenspalt 6 in ihrer Tiefe ab, so daß die in diesen strömende Schmelze zunehmend in axialer Richtung umgelenkt wird und die Nuten begrenzende Stege überschreitet. Der Übergangsbereich zwischen dem flanschförmigen Fuß und dem zylindrischen Dorn 2 ist in der dargestellten Weise abgerundet.

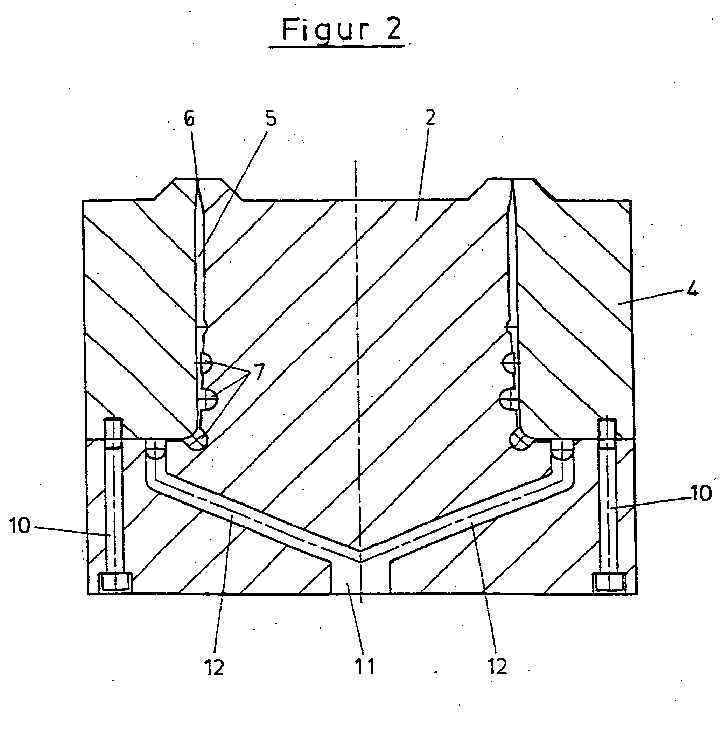

Der zylindrische Ring 4 weist eine untere radiale ebene Stirnfläche 8 auf, mit der er auf der radialen ebenen Ringfläche des flanschförmigen Fußes 3 aufliegt. Der flanschförmige Fuß 3 ist mit Bohrungen 9 versehen, durch die in der aus Fig. 2 ersichtlichen Weise Dehnschrauben 10 hindurchgeführt sind, die in entsprechende Gewindebohrungen des zylindrischen Rings 4 eingeschraubt sind. Durch diese Dehnschrauben 10 ist der zylindrische Ring 4 mit seiner Stirnfläche 8 gegen die Ringfläche 3 des flanschförmigen Fußes verspannt, so daß die dadurch miteinander verbundenen Stirn- und Ringflächen spaltfrei und dicht aufeinanderliegen. Soweit außerhalb des gekrümmten Übergangsbereichs die Stirnfläche 8 des zylindrischen Rings 4 auf dem Bereich der Ringfläche des flanschförmigen Fußes 3 aufliegt, in den die Nuten 7 eingearbeitet sind, stützt sich der Ring 4 auf den Rändern der die Nuten begrenzenden Stege ab.

Den Anfangsbereichen der Nuten 7, die gegenüber dem flanschförmigen Fuß 3 geschlossen sind, wird durch Kanäle 11, 12 von einem Extruder die Kunststoffschmelze zugeführt. Diese tritt aus den Nuten 7 in dem Übergangsbereich zwischen dem flanschförmigen Fuß 3 und dem Dorn 2 in den Ringkanal 5 ein und strömt sodann mit zunehmend axialer Strömung zu dem Ringspalt 6.

Der flanschförmige Fuß bzw. der untere Teil des Extruderdüsenkopfs ist in bekannter Weise scheibenförmig aufgebaut, um das Kanalsystem 11, 12 in üblicher Weise durch Bohrungen ausführen zu können.

In dem Übergangsbereich zwischen dem flanschförmigen Fuß 3 und dem Dorn 2 ist auch die innere Ecke des zylindrischen Rings 4 entsprechend abgerundet ausgeführt, so daß sich der ringförmige Kanal bis in diesen Übergangsbereich hinein erstreckt und von diesem seinen Ausgang nimmt.

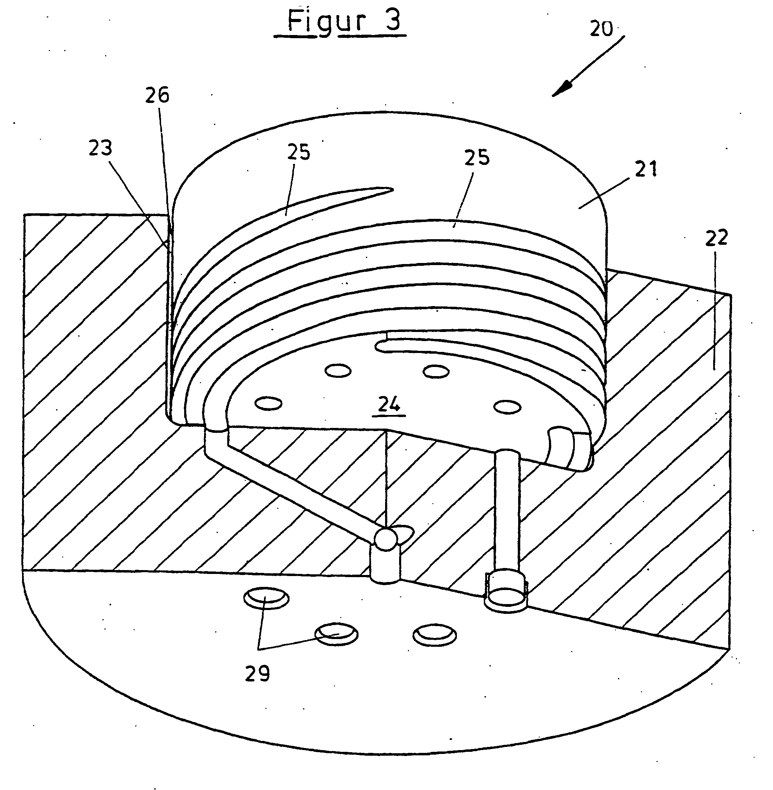

Fig. 3 zeigt ein zweites Ausführungsbeispiel eines Düsenkopfs 20, bei dem der zylindrische Dorn 21 in eine Sacklochbohrung eines Düsenkörpers 22 eingesetzt ist, wobei der ringförmige Kanal 23 zwischen der inneren Wandung der Bohrung und dem Umfang des Dorns 21 gebildet ist.

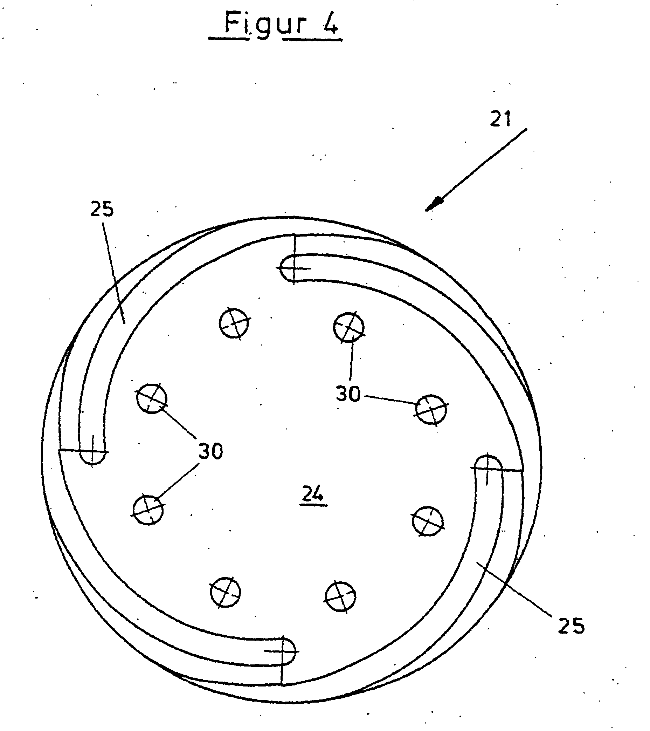

Wie insbesondere aus Fig. 4 ersichtlich ist, sind in den Dorn 21 ausgehend von dem Randbereich seiner unteren ebenen Stirnfläche 24 spiralig Nuten 25 eingearbeitet, die über den abgerundeten Übergangsbereich zwischen der Stirnfläche 24 und den Umfang des Dorns 21 verlaufen und auf dem Umfang des Dorns 21 mehr gängig wendelförmig weitergeführt sind. Die Nuten 25 sind mit zum Düsenspalt 26 hin abnehmender Tiefe ausgeführt, so daß die Schmelze die Stege der Nuten in axialer Richtung zunehmend überschreitet und in dem ringförmigen Kanal 23 eine axiale Strömung annimmt.

Der Boden der eingedrehten und geschliffenen Sacklochbohrung ist eben und parallel zu der Stirnfläche 24 ausgebildet, so daß die Stirnfläche und der Boden dichtend aufeinander liegen. Der Dorn 24 ist durch Spannschrauben 28, die die Bohrungen 29 des Bodens des Düsenkörpers 22 durchsetzen und in Gewindebohrungen 30 der Stirnfläche des Dorns 24 eingeschraubt sind, mit dem Boden verspannt. Dadurch liegt die Stirnfläche 24 des Dorns 21 mit ihrer aus Fig. 4 ersichtlichen Fläche, die durch eine geschlossene Umfangslinie gekennzeichnet ist, dicht auf dem ebenen Boden des Sacklochs auf.

In die Anfangsbereiche der Nuten 24 münden die Schmelze zuführende Kanäle 31, 32.

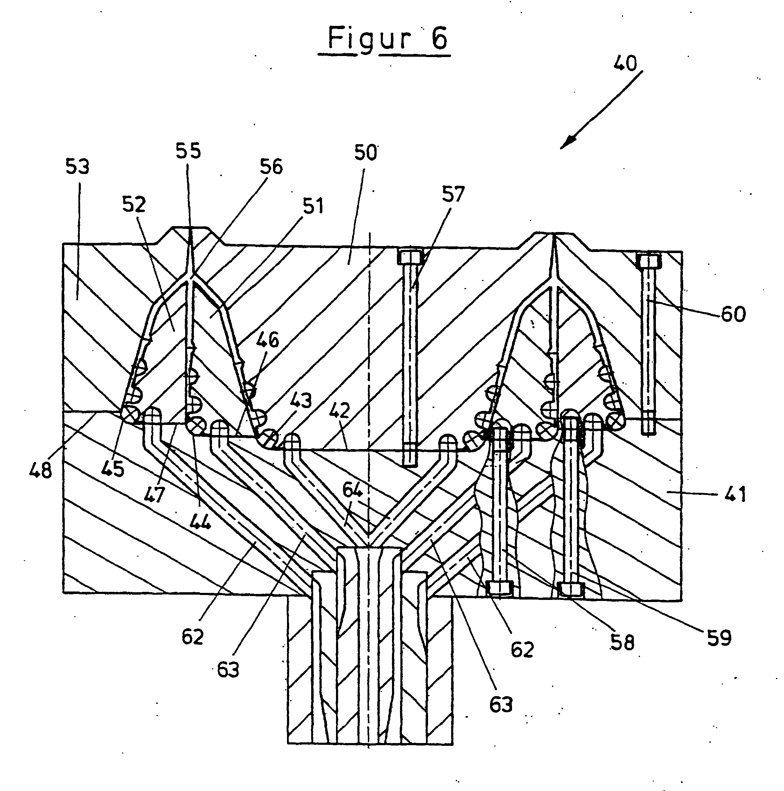

Aus Fig. 6 ist eine dritte Ausführungsform des Extruderdüsenkopfs 40 ersichtlich, der der Koextrusion dreier Schmelzen dient. Der Düsenkopf 40 besteht aus einem den Boden bildenden Düsenkörper 41, der in seinem mittleren Bereich mit einer kreisscheibenförmigen Vertiefung 42 mit ebenen Boden versehen ist. An diese kreisscheibenförmige Vertiefung schließen sich über abgerundete Stufen 43, 44, 45 Ringflächen 46, 47, 48 an. In die mittlere Vertiefung 42 ist ein rotationssymmetrischer Kern 50 eingesetzt, der sich ausgehend von seiner Stirnfläche in der dargestellten Weise durch konusförmige Abschnitte nach außen hin erweitert. Auf die Ringflächen 46, 47, 48 sind Ringe 51, 52, 53 aufgesetzt, die ringförmige ebene untere Stirnflächen aufweisen und damit dichtend auf den konzentrischen Ringflächen 46, 47, 48 aufliegen. In die ebene Stirnfläche des zentralen Kerns 50 sind mehrere Nuten spiralig eingearbeitet, die über die abgerundeten Kanten hinweggeführt sind und sich über den Mantel des unteren konusförmigen Teils erstrecken und in der dargestellten Weise in Richtung auf den Düsenspalt 55 in ihrer Tiefe abnehmen.

Entsprechend sind in die unteren ringförmigen Stirnflächen der Ringe 51, 52 spiralige Nuten eingearbeitet, die ebenfalls über die durch die abgerundeten Kanten gebildeten Übergangsbereiche in die Umfangsflächen der Ringe 51, 52 einlaufen und zum Düsenspalt 55 hin in ihrer Tiefe abnehmen. Zwischen dem zentralen Kern 50 und dem Ring 51 sowie zwischen den Ringen 51 und 52 sowie 52 und 53 sind ringförmige Kanäle gebildet, die an einer gemeinsamen Kreuzungsstelle 56 ineinander münden und ausgehend von dieser zu dem Düsenspalt 56 weitergeführt sind.

Der zentrale Kern 50 ist mit dem Düsenkörper 41 durch Dehnschrauben 57 verspannt.

Die Ringe 51, 52, 53 sind mit dem Düsenkörper 41 durch Dehnschrauben 58, 59, 60 verspannt. Da der zentrale Kern und die Ringe 51, 52, 53 mit ebenen Stirnflächen auf komplementären ebenen Boden bzw. Ringflächen des Düsenkörpers 41 aufliegen und mit diesem verspannt sind, ergeben sich spaltfreie Abdichtungen, so daß die zugeführte Schmelze nur durch die eingearbeiteten Nuten und die ringförmigen Kanäle zu dem Düsenspalt 55 aufsteigen kann, ohne daß sich in Spalten oder Ecken die Schmelze aufstauen und verspröden kann. Die drei Schmelzen werden durch die Kanäle 62, 63, 64 den Anfangsbereichen der Nuten zugeführt.

## Patentansprüche

1. Extruderdüsenkopf (1), vorzugsweise Folienblaskopf, bestehend
aus einem inneren zylindrischen Dorn (2) und einem diesen konzentrisch einfassenden Mantel (4), zwischen denen ein ringförmiger Kanal (5) gebildet ist, der in einem Düsenspalt (6) mündet, und
aus mindestens einer in den dem Düsenspalt (6) gegenüber liegenden Bereich in den ringförmigen Kanal (5) mündenden, eine Schmelze zuführenden Leitung,
wobei der Dorn (2) einstückig mit einem flanschförmigen Fuß (3) versehen ist und der Mantel (4) mit seiner unteren Stirnfläche (8) dichtend auf der Ringfläche des flanschförmigen Fußes (3) aufliegt und mit dieser verbunden ist,
**dadurch gekennzeichnet,**
- **dass** der ringförmige Kanal (5) unmittelbar an der Ringfläche des flanschförmigen Fuß (3) angrenzt, auf welcher der Mantel (4) mit seiner unteren Stirnfläche dichtend aufliegt und
- **dass** die eine Schmelze zuführende Leitung (11, 12) in dem Bereich, in dem der ringförmige Kanal (5) an der Ringfläche des flanschförmigen Fußes (3) angrenzt, mündet.

2. Extruderdüsenkopf (1) nach Anspruch 1,
**dadurch gekennzeichnet, dass**
der flanschförmige Fuß (3) angrenzend an den Dorn (2) mit einer oder mehreren spiraligen Nuten (7) versehen ist, die über den Übergangsbereich von der Umfangsfläche des Dorns (2) zum flanschförmigen Fuß (3) in die Umfangsfläche des Dorns (2) wendelförmig einlaufen, deren Tiefe zum Düsenspalt (6) hin abnehmen und die im Fuß (3) ihren Anfang haben und in deren Anfangsbereiche die die Schmelze zuführenden Bohrungen münden.

3. Extrusionsdüsenkopf (1) nach einem der vorstehenden Ansprüche,
**dadurch gekennzeichnet, dass**
die Stirnfläche des Mantels (4) mit dem flanschförmigen Fuß (3) verspannt ist.

4. Extruderdüsenkopf (1) nach einem der vorstehenden Ansprüche,
**dadurch gekennzeichnet, dass**
der Bereich, in dem der ringförmige Kanal (5) beginnt, abgerundet ist.

5. Extruderdüsenkopf (1) nach einem der vorstehenden Ansprüche,
**dadurch gekennzeichnet, dass**
die Stirnfläche des Mantels (4) eben ist und auf einer ebenen Ringfläche aufliegt, wobei die Stirnfläche und die Ringfläche planparallel zueinander verlaufen.

6. Extruderdüsenkopf (40), vorzugsweise Folienblaskopf, bestehend
aus einem den Boden bildenden Düsenkörper (41), auf den ein innerer rotationssymmetrischer Kern (50) mit dichtender Stirnfläche (42) aufgesetzt und mit diesem verbunden ist,
aus mindestens einem den Kern (50) einfassenden Ring (51, 52) und aus einem den mindestens einen Ring (51, 52) einfassenden äußeren Ring (53),
wobei die Stirnflächen der Ringe (51, 52, 53) dichtend an komplementären Ringflächen (46, 47, 48) des Bodens anliegen und mit diesen verbunden sind und wobei der Kern (50) mit dem diesen einfassenden Ring (51) und die einander einfassenden Ringe (52, 53) ringförmige Kanäle begrenzen, die in einen gemeinsamen Düsenspalt (55) münden,
**dadurch gekennzeichnet, dass**
dass die ringförmigen Kanäle unmittelbar an der dichtenden Stirnfläche (42) des Kerns bzw. an der komplementären Ringfläche (46, 47) des Bodens, an der (46, 47) die Stirnfläche des zumindest einen, den Kern einfassenden Rings (51, 52) anliegt und mit welchem der zumindest eine Ring (51, 52) verbunden ist, angrenzen, und
dass die die Schmelze zuführenden Kanäle (62, 63, 64) in den Bereichen münden, in denen die ringförmigen Kanäle unmittelbar an dem Boden, auf dem der Kern (50) aufgesetzt ist, bzw. an der Ringfläche des Bodens, an der die Stirnfläche des zumindest einen Rings (51, 52) anliegt, angrenzen.

7. Extruderdüsenkopf (40) nach vorstehendem Anspruch,
**dadurch gekennzeichnet,**
**dass** die Randbereiche der Stirnflächen des Kerns (50) und des zumindest einen Rings (51, 52) jeweils mit einer oder mehreren spiralig verlaufenden Nuten versehen sind, die über die Übergangsbereiche zwischen der Umfangsflächen des Kerns (50) und des Rings (51, 52) zu deren Stirnfläche spiralig oder wendelförmig in die Umfangsfläche des Kerns (50) und des Rings (51, 52) einlaufen und ihre Anfänge in den Randbereich haben und deren Tiefen zum Düsenspalt hin abnehmen, und
**dass** in den Anfangsbereichen der Nuten die die Schmelze zuführenden Kanäle (62, 63, 64) münden.

8. Extrusionsdüsenkopf (40) nach einem der beiden vorstehenden Ansprüche,
**dadurch gekennzeichnet, dass**
die Stirnflächen der Ringe (51, 52, 53) mit den Ringflächen (46, 47, 48) und die Stirnfläche des Kerns (50) mit dem Boden des Düsenkörpers (41) verspannt sind.

9. Extruderdüsenkopf (40) nach einem der drei vorstehenden Ansprüche,
**dadurch gekennzeichnet, dass**
die Bereiche, in denen die ringförmigen Kanäle beginnen, abgerundet sind.

10. Extruderdüsenkopf (40) nach einem der vier vorstehenden Ansprüche,
**dadurch gekennzeichnet, dass**
die Stirnflächen der Ringe (51, 52, 53) und die Stirnfläche des Kerns (50) eben sind und auf ebenen Ringflächen (46, 47, 48) und ebenen Bodenflächen (42) aufliegen, wobei die Stirnflächen und die Ringflächen (46, 47, 48) und Bodenflächen (42) planparallel zueinander verlaufen.

11. Extruderdüsenkopf (20), vorzugsweise Folienblaskopf, bestehend
aus einem inneren zylindrischen Dorn (21) und einem diesen konzentrisch einfassenden Mantel, zwischen denen ein ringförmiger Kanal (23) gebildet ist, der in einem Düsenspalt (26) mündet, und
aus mindestens einer in den dem Düsenspalt (26) gegenüber liegenden Bereich in den ringförmigen Kanal (23) mündenden, eine Schmelze zuführenden Leitung (31),
**dadurch gekennzeichnet,**
**dass** der Dorn (21) in eine Sacklockbohrung eines den Mantel bildenden Düsenkörpers (22) eingesetzt ist, dessen innere Wandung mit dem Dorn (21) den ringförmigen Kanal (23) begrenzt,
**dass** die Stirnfläche (24) des Dorns (21) innerhalb des Übergangsbereichs dichtend auf der Bodenfläche der Sacklochbohrung aufliegt und mit der Bodenfläche verbunden ist,
**dass** der ringförmige Kanal (23) unmittelbar an der Bodenfläche der Sacklochbohrung angrenzt, auf welcher die Stirnfläche (24) des Dorns (21) dichtend aufliegt und mit welcher die Stirnfläche (24) des Dorns (21) verbunden ist und
**dass** die die Schmelze zuführende Leitung (31, 32) in dem Bereich, in dem der ringförmige Kanal (23) an der Bodenfläche der Sacklochbohrung angrenzt, mündet.

12. Extruderdüsenkopf (20) nach vorstehendem Anspruch,
**dadurch gekennzeichnet,**
**dass** der Randbereich der Stirnfläche (24) des Dorns (21) mit einer oder mehreren spiralig verlaufenden Nuten (25) versehen ist, die über den Übergangsbereich zwischen der Umfangsfläche des Dorns (21) und dessen Stirnfläche (24) wendelförmig in die Umfangsfläche des Dorns (21) einlaufen und ihren Anfang in dem Randbereich der Stirnfläche (24) haben und deren Tiefen zum Düsenspalt (26) hin abnehmen, und
**dass** in den Anfangsbereichen der Nuten die die Schmelze zuführenden Bohrungen (31, 32) münden.

13. Extruderdüsenkopf (20) nach einem der beiden vorstehenden Ansprüche,
**dadurch gekennzeichnet, dass**
die Stirnfläche (24) des Dorns (21) mit der Bodenfläche der Sacklochbohrung verspannt ist.

14. Extruderdüsenkopf (20) nach einem der drei vorstehenden Ansprüche,
**dadurch gekennzeichnet, dass**
der Bereich, in dem der ringförmige Kanal (23) beginnt, abgerundet ist.

15. Extruderdüsenkopf (20) nach einem der vier vorstehenden Ansprüche,
**dadurch gekennzeichnet, dass**
die Stirnfläche des Dorns (21) eben ist und auf einer ebenen Bodenfläche des Düsenkörpers (22) aufliegt, wobei die Stirnfläche und die Bodenfläche planparallel zueinander verlaufen.

## Claims

1. Extruder die (1), preferably a film blowing die, comprising
an inner cylindrical mandrel (2) and a casing (4) concentrically enclosing it, between which there is formed an annular channel (5), which opens out into a die gap (6), and
comprising at least one melt-supplying line, which opens out into the annular channel (5) in the region remote from the die gap (6),
the mandrel (2) being integrally provided with a flange-like foot (3) and the casing (4) resting with its lower end face (8) in a sealing manner on the annular surface of the flange-like foot (3) and being connected to the latter,
**characterized**
**in that** the annular channel (5) is directly adjacent to the annular surface of the flange-like foot (3), on which the casing (4) rests with its lower end face in a sealing manner and
**in that** the melt-supplying line (11, 12) opens out into the region in which the annular channel (5) is adjacent to the annular surface of the flange-like foot (3).

2. Extruder die (1) according to Claim 1,
**characterized in that** the flange-like foot (3) adjacent to the mandrel (2) is provided with one or more spiral grooves (7), which run helically via the transitional regions from the circumferential surface of the mandrel (2) to the flange-like foot (3) into the circumferential surface of the mandrel (2), the depth of which decreases towards the die gap (6) and which start in the foot (3) and in the starting regions of which the bores supplying the melt open out.

3. Extruder die (1) according to one of the preceding claims, **characterized in that** the end face of the casing (4) is braced with the flange-like foot (3).

4. Extruder die (1) according to one of the preceding claims, **characterized in that** the region in which the annular channel (5) begins is rounded off.

5. Extruder die (1) according to one of the preceding claims, **characterized in that** the end face of the casing (4) is planar and rests on a planar annular surface, the end face and the annular surface running plane-parallel to one another.

6. Extruder die (40), preferably a film-blowing die, comprising
a die body (41) forming the bottom, on which an inner rotationally symmetrical core (50) is placed with a sealing end face (42) and connected to the latter,
at least one ring (51, 52), enclosing the core (50), and an outer ring (53), enclosing the at least one ring (51, 52),
the end faces of the rings (51, 52, 53) bearing in a sealing manner against complementary annular surfaces (46, 47, 48) of the bottom and being connected to the latter and the core (50) acting together with the ring (51) enclosing the latter and the rings (52, 53) enclosing one another to bound the annular channels which open out into a common die gap (55),
**characterized**
**in that** the annular channels are directly adjacent to the sealing end face (42) of the core and the complementary annular surface (46, 47) of the bottom against which (46, 47) there bears the end face of the at least one ring (51, 52) enclosing the core and to which the at least one ring (51, 52) is connected, and
**in that** the channels (62, 63, 64) supplying the melt open out into the regions in which the annular channels are directly adjacent to the bottom on which the core (50) is placed, or to the annular surface of the bottom against which the end face of the at least one ring (51, 52) bears.

7. Extruder die (40) according to the preceding claim, **characterized in that** the edge regions of the end faces of the core (50) and of the at least one ring (51, 52) are respectively provided with one or more spirally running grooves, which run spirally or helically via the transitional regions between the circumferential surfaces of the core (50) and of the ring (51, 52) to the end face of the latter into the circumferential surface of the core (50) and of the ring (51, 52) and start in the edge region and the depths of which decrease towards the die gap, and **in that** the channels (62, 63, 64) supplying the melt open out into the starting regions of the grooves.

8. Extrusion die (40) according to either of the two preceding claims, **characterized in that** the end faces of the rings (51, 52, 53) are braced with the annular surfaces (46, 47, 48) and the end face of the core (50) is braced with the bottom of the die body (41).

9. Extruder die (40) according to one of the three preceding claims, **characterized in that** the regions in which the annular channels begin are rounded off.

10. Extruder die (40) according to one of the four preceding claims, **characterized in that** the end faces of the rings (51, 52, 53) and the end face of the core (50) are planar and rest on planar annular surfaces (46, 47, 48) and planar bottom surfaces (42), the end faces and the annular surfaces (46, 47, 48) and bottom surfaces (42) running plane-parallel to one another.

11. Extruder die (20), preferably a film blowing die, comprising
an inner cylindrical mandrel (21) and a casing concentrically enclosing it, between which there is formed an annular channel (23), which opens out into a die gap (26), and
comprising at least one melt-supplying line (31), which opens out into the annular channel (23) in the region remote from the die gap (26),
**characterized in that** the mandrel (21) is fitted in a blind bore of a die body (22) forming the casing, the inner wall of which acts together with the mandrel (21) to bound the annular channel (23),
**in that** the end face (24) of the mandrel (21) within the transitional region rests in a sealing manner on the bottom surface of the blind bore and is connected to the bottom surface,
**in that** the annular channel (23) is directly adjacent to the bottom surface of the blind bore on which the end face (24) of the mandrel (21) rests in a sealing manner and to which the end face (24) of the mandrel (21) is connected and
**in that** the melt-supplying line (31, 32) opens out into the region in which the annular channel (23) is adjacent to the bottom surface of the blind bore.

12. Extruder die (20) according to the preceding claim, **characterized in that** the edge region of the end face (24) of the mandrel (21) is provided with one or more spirally running grooves (25), which run helically via the transitional region between the circumferential surface of the mandrel (21) and its end face (24) into the circumferential surface of the mandrel (21) and start in the edge region of the end face (24) and the depths of which decrease towards the die gap (26), and **in that** the bores (31, 32) supplying the melt open out into the starting regions of the grooves.

13. Extruder die (20) according to either of the two preceding claims, **characterized in that** the end face (24) of the mandrel (21) is braced with the bottom surface of the blind bore.

14. Extruder die (20) according to one of the three preceding claims, **characterized in that** the region in which the annular channel (23) begins is rounded off.

15. Extruder die (20) according to one of the, four preceding claims, **characterized in that** the end face of the mandrel (21) is planar and rests on a planar bottom surface of the die body (22), the end face and the bottom surface running plane-parallel to one another.

## Revendications

1. Tête d'extrusion (1), de préférence tête de soufflage de feuille constituée
d'un mandrin cylindrique interne (2) et d'une enveloppe (4) entourant concentriquement celui-ci, entre lesquels est formé un canal annulaire (5) qui débouche dans une fente de filière (6) et
d'au moins un conduit d'amenée de masse fondue, débouchant dans la zone opposée à la fente de filière (6) dans le canal annulaire (5),
où le mandrin (2) est pourvu unitairement d'un pied en forme de bride (3) et l'enveloppe (4) repose avec sa face frontale inférieure (8) d'une manière étanche sur la face annulaire du pied en forme de bride (3) et est reliée à celle-ci,
**caractérisée en ce**
- **que** le canal annulaire (5) avoisine directement la face annulaire du pied en forme de bride (3) sur laquelle repose l'enveloppe (4) d'une manière étanche avec sa face frontale inférieure et
- **que** le conduit (11, 12) amenant une masse fondue débouche dans la zone dans laquelle le canal annulaire (5) avoisine la face annulaire du pied en forme de bride (3).

2. Tête d'extrusion (1) selon la revendication 1, **caractérisée en ce que** le pied en forme de bride (3), au voisinage du mandrin (2), présente une ou plusieurs rainures (7) en forme de spirale qui entrent en forme d'hélice par la zone de transition de la face périphérique du mandrin (2) au pied en forme de bride (3) dans la face périphérique du mandrin (2), dont la profondeur diminue vers la fente de filière (6), et qui ont leur début dans le pied (3) et dans les zones de début desquelles débouchent les perçages amenant la masse fondue.

3. Tête d'extrusion (1) selon l'une des revendications précédentes, **caractérisée en ce que** la face frontale de l'enveloppe (4) est mise en tension avec le pied en forme de bride (3).

4. Tête d'extrusion (1) selon l'une des revendications précédentes, **caractérisée en ce que** la zone, dans laquelle commence le canal annulaire (5), est arrondie.

5. Tête d'extrusion (1) selon l'une des revendications précédentes, **caractérisée en ce que** la face frontale de l'enveloppe (4) est plane et repose sur une face annulaire plane, où la face frontale et la face annulaire s'étendent de manière plane et parallèle.

6. Tête d'extrusion (40), de préférence tête de soufflage de feuille, constituée
d'un corps de filière (41) formant le fond sur lequel est placé un noyau interne symétrique en rotation (50) avec une face frontale d'étanchéité (42) et est relié à celui-ci,
d'au moins un anneau (51, 52) entourant le noyau (50) et d'un anneau extérieur (53) entourant au moins un anneau (51, 52),
où les faces frontales des anneaux (51, 52, 53) s'appliquent d'une manière étanche à des faces annulaires complémentaires (46, 47, 48) du fond et sont reliées à celui-ci, et où le noyau (50) avec l'anneau (51) entourant celui-ci et les anneaux (52, 53) entourant l'un l'autre délimitent des canaux annulaires qui débouchent dans une fente de filière commune (55),
**caractérisée**
**en ce que** les canaux annulaires avoisinent directement la face frontale d'étanchéité (42) du noyau respectivement de la face annulaire complémentaire (46, 47) du fond à laquelle (46, 47) s'applique la face frontale d'au moins un anneau (51, 52) entourant le noyau et avec lequel est relié au moins un anneau (51, 52) et
**en ce que** les canaux (62, 63, 64) amenant la masse fondue débouchent dans les zones dans lesquelles les canaux annulaires avoisinent directement le fond sur lequel est placé le noyau (50), respectivement la face annulaire du fond à laquelle s'applique la face frontale d'au moins un anneau (51, 52).

7. Tête d'extrusion (40) selon la revendication précédente,
**caractérisée**
**en ce que** les zones de bord des faces frontales du noyau (50) et d'au moins un anneau (51, 52) présentent chacune une ou plusieurs rainures s'étendant en spirale qui s'engagent par les zones de transition entre les faces périphériques du noyau (50) et de l'anneau (51, 52) à leur face frontale en spirale ou hélicoïdalement dans la face périphérique du noyau (50) et de l'anneau (51, 52), et qui ont leurs débuts dans la zone de bord, et dont les profondeurs diminuent vers la fente de filière, et en ce que débouchent dans les zones de début des rainures les canaux (62, 63, 64) amenant la masse fondue.

8. Tête d'extrusion (40) selon l'une des deux revendications précédentes,
**caractérisée**
**en ce que** les faces frontales des anneaux (51, 52, 53) sont mises en tension avec les faces annulaires (46, 47, 48) et la face frontale du noyau (50) avec le fond du corps de filière (41).

9. Tête d'extrusion (40) selon l'une des trois revendications précédentes,
**caractérisée**
**en ce que** les zones, dans lesquelles commencent les canaux annulaires, sont arrondies.

10. Tête d'extrusion (40) selon l'une des quatre revendications précédentes,
**caractérisée**
**en ce que** les faces frontales des anneaux (51, 52, 53) et la face frontale du noyau (50) sont planes et reposent sur des faces annulaires planes (46, 47, 48) et des faces de fond planes (42), où les faces frontales et les faces annulaires (46, 47, 48) et les faces de fond (42) s'étendent d'une manière plane et parallèle les unes aux autres.

11. Tête d'extrusion (20), de préférence tête de soufflage de feuille, constituée
d'un mandrin cylindrique interne (21) et d'une enveloppe entourant concentriquement celui-ci, entre lesquels est formé un canal annulaire (23) qui débouche dans une fente de filière (26) et d'au moins un conduit (31) amenant la masse fondue, débouchant dans la zone opposée à la fente de filière (26) dans le canal annulaire (23),
**caractérisée**
**en ce que** le mandrin (21) est placé dans un trou borgne d'un corps de filière (22) formant l'enveloppe dont la paroi interne délimite avec le mandrin (21) le canal annulaire (23),
**en ce que** la face frontale (24) du mandrin (21) repose à l'intérieur de la zone de transition d'une manière étanche sur la face de fond du trou borgne et est reliée à la face de fond,
**en ce que** le canal annulaire (23) avoisine directement la face de fond du trou borgne sur laquelle repose d'une manière étanche la face frontale (24) du mandrin (21) et avec laquelle est reliée la face frontale (24) du mandrin (21) et
**en ce que** le conduit (31, 32) amenant la masse fondue débouche dans la zone dans laquelle le canal annulaire (23) avoisine la face de fond du trou borgne.

12. Tête d'extrusion (20) selon la revendication précédente, **caractérisée en ce que** la zone de bord de la face frontale (24) du mandrin (21) présente une ou plusieurs rainures (25) s'étendant en spirale qui s'engagent dans la zone de transition entre la face périphérique du mandrin (21) et sa face frontale (24) en forme d'hélice dans la face périphérique du mandrin (21) et qui ont leur début dans la zone de bord de la face frontale (24) et dont les profondeurs diminuent vers la fente de filière (26), et **en ce que** débouchent dans les zones de début des rainures les perçages (31, 32) amenant la masse fondue.

13. Tête d'extrusion (20) selon l'une des deux revendications précédentes,
**caractérisée**
**en ce que** la face frontale (24) du mandrin (21) est mise en tension avec la face de fond du trou borgne.

14. Tête d'extrusion (20) selon l'une des trois revendications précédentes,
**caractérisée**
**en ce que** la zone, dans laquelle commence le canal annulaire (23), est arrondie.

15. Tête d'extrusion (20) selon l'une des quatre revendications précédentes,
**caractérisée**
**en ce que** la face frontale du mandrin (21) est plane et repose sur une face de fond plane du corps de filière (22), où la face frontale et la face de fond s'étendent d'une manière plane et parallèle l'une à l'autre.
